# EUROPEAN PATENT SPECIFICATION

(11) **EP 1 783 386 B1**
(45) Date of publication and mention of the grant of the patent: **08.08.2012**
(21) Application number: 06122743.5
(22) Date of filing: 23.10.2006
(51) Int. Cl.: F16C 33/62, F04B 37/08

(54) **A rolling bearing for use in a cryogenic pump**
Wälzlager für eine Kryopumpe
Palier à roulement pour une pompe cryogénique

(30) Priority: 02.11.2005 SE 0502447
(43) Date of publication of application: 09.05.2007
(73) Proprietor: Aktiebolaget SKF, 415 50 Göteborg (SE)
(72) Inventor: Kahlman, Lars, S-433 31, Partille (SE); Dietl, Paul, A-3321 Ardagger (AT); Horton, Steuart, 3706 HW Zeist (NL)

(56) References cited:
- EP-A- 1 217 235
- WO-A-98/12361
- JP-A- 9 170 624
- US-A1- 5 887 985
- US-B2- 6 558 139

## Description

The present invention relates to rolling bearings for use submerged in fluids of very low temperature, such as In pumps designed to pump LPG (Liquified Petrol Gas) at temperatures below -47°C and particularly LNG (Liquefied Natural Gas) at temperatures about and even below -160°C, such as liquefied hydrogen at -253°C.

Bearings for such purpose must be highly resistant to corrosion due to their contact with the fluid, which Is pumped.

Highly corrosion resistant steels have traditionally been delivered in austenitic, ferritic or austenitic-ferritic structures, but such steels do not offer the high hardness required for rolling bearings to give adequate fatigue and wear resistance. Traditional bearing steels, such as AISI 52100 or AISI 440C are normally required to be of the hard martensitic phase to achieve the basic requirements with a hardness no lower than HRC 58 and a clean and fine structure. Traditional martensitic stainless bearing steels, for instance the AISI 440C steel, which is known to be "corrosion slow", are only delivered with low corrosion protection and with reduced fatigue resistance.

US 6,558,139 describes a self-lubricating rolling bearing for such an application, and which incorporates an inside and an outside race of stainless steel, such as for instance heat treated 440 stainless steel, a plurality of rolling bodies positioned between the inside and outside races, and a polymeric cage spacing apart the rolling bodies between the races, which is preferably made of polyether ether ketone (PEEK). The material in the rolling bodies can be ceramic rolling bodies or rolling bodies made from hardened stainless steel.

This earlier known rolling bearing thus has rings made from a material such as AISI 440C, and therefore has only low protection against corrosion and rather low fatigue resistance.

The purpose of the present invention is to propose a rolling bearing for use in a cryogenic environment, which has a high corrosion resistance and a high fatigue resistance and this has been achieved in that the bearing has been given the features defined in the accompanying claim 1.

The invention thus proposes a rolling bearing for use in a cryogenic pump where the bearing is submerged in fluid of a temperature below -100 degrees centigrade, and which incorporates an inside and an outside race of stainless steel, a plurality of rolling bodies positioned between the inside and outside races, and a polymeric cage spacing apart the rolling bodies between the races, where the polymeric cage is made of a material chosen from a group incorporating polyether ether ketone; polyparaphenylene; polyimide and polyamide-imide, and wherein the inside and outside races consist of a through-hardened, super-tough martensitic high-nitrogen stainless steel, having a very fine material structure, the steel being composed of 0.25 - 0.45 % C, 13 - 17 % Cr, 0.8 - 1.8 % Mo, 0.15 - 0,45 % N and the remainder Fe and impurities, all percentages by weight, the Rockwell C hardness HRC is > 58 and the retained austenite content is < 7 vol. %, and that the rolling bodies are manufactured from anyone of a silicon-nitride ceramic composite and an alumina-zirconia ceramic composite.

Preferably the super-tough martensitic high-nitrogen stainless steel in the bearing races has been subjected to a cryogenic heat treatment for reducing the austenitic content of the material.

Generally with this steel is used low temperature tempering at 180°C for corrosion resistant applications. However the steel also shows secondary hardening after tempering at e.g. 480°C where the as quenched retained austenite contents are also reduced by multiple high temperature tempering.

It is in this secondary hardened condition that the steel is used for cryogenic applications, however after hardening, the retained austenite content can also be reduced by deep freezing the bearing steel components at temperatures of -65°C to -198°C and preferably in the range of -75 °C to -150 °C depending on the application. With this combination of treatments deep freezing and secondary hardening hardness levels of 58 to 61 HRC can be achieved with retained austenite contents of < 7 vol % and in this condition any remaining austenite is stabilised such that it will resist any temperature induced transformation, thus avoiding the formation of fresh untempered virgin martensite and associated irreversible volume changes, which would lead to loss of bearing component precision and an balanced lading condition.

The material has a fine microstructure it is a high alloy steel with 13 to 17 wt% Cr, but by correct choice of hot working and soft shaping conditions together with subsequent hardening temperature and the above stabilisation, microstructures which are as fine as conventional bearing steel (AISI 52100, 1.5 wt% Cr) can be obtained, which are generally beneficial in terms of bearing life and load carrying capacity.

The material is through hardened at temperatures in the range of 1020 °C to 1060 °C and then secondary hardened by tempering in the temperature range of 460 °C to 520 °C. The purpose of this treatment is to precipitate particles (within the matrix) of martensite in the form of nitride carbide or carbonitride zones. In this condition the material has:
(i) maximum strength
(ii) high microstructural (dimensional) stability in low temperature applications
(iii) good wear resistance under poorly lubricated conditions,
whilst still retaining corrosion and oxidation resistance (due to high chromium content) and maximizing the dissolved chromium after hardening - which is in part a consequence of the finely dispersed carbide, nitride particles formed in previous operations. The high levels and uniformly dissolved chromium confers high oxidation resistance and when local flash temperatures at rolling bearing contacts are encountered the oxidation resistance due to the chromium is beneficial. This condition can occur locally at asperity contacts in bearings lubricated with liquified gases .

The benefits are offered in situations where local flash temperatures are produced

The impact toughness of this new, super-tough martensitic steel has been substantially improved as compared e.g. to the AISI 52100, where the impact toughness of the new material is about 64 kJ/m² whereas the AISI 52100 has revealed a value of about 38 kJ/m².

The rolling bodies - balls or rollers - can preferably be manufactured from a silicon-nitride ceramic composite or alternatively from an alumina-zirconia ceramic composite.

It is advantageous to use a cage made of a high-performance polymeric material chosen from a group incorporating polyether ether ketone, known as PEEK; poly paraphenylene, e.g. TECAMAX from Ensinger Ltd, UK; polyimide, e.g. SINTIMID from Ensinger Ltd, UK and polyamide-imide, e.g. TORLON from Solvay Advanced Polymers, USA.

These polymers can be filled with fillers such as glass fibres, PTFE, graphite fibres, carbon black for improving the tribological and mechanical properties. Glass fibre fillers are often used in ranges of 0 to 30 volume %, commonly 10 to 30 volume %; whereas PTFE, graphite fibres and carbon black is used in ranges of 2 to 15 volume %.

## Claims

1. A rolling bearing for use in a cryogenic pump where the bearing is submerged in fluid of a temperature below -100 degrees centigrade, and incorporating an inside and an outside race of stainless steel, a plurality of rolling bodies positioned between the inside and outside races, and a polymeric cage spacing apart the rolling bodies between the races,
where the polymeric cage is made of a material chosen from a group incorporating polyether ether ketone; polyparaphenylene; polyimide and polyamlde-imide, **characterized therein,**
that the inside and outside race consist of a through-hardened, super-tough martensitic high-nitrogen stainless steel, having a very fine material structure, the steel being composed of 0.25 - 0.45 % C, 13 - 17 % Cr, 0.8 - 1.8 % Mo, 0.15 - 0.45 % N, and the remainder Fe and impurities, all percentages per weight, the Rockwell C hardness HRC is > 58, and the retained austenite content is of < 7 vol. %, and
that the rolling bodies are manufactured from anyone of a silicon-nitride ceramic composite and an alumina-zirconia ceramic composite.

## Patentansprüche

1. Wälzlager zur Verwendung in einer Kryopumpe, wobei das Lager in Fluid mit einer Temperatur von unter -100 Grad Celsius eingetaucht ist, und mit einem Innen- und einem Außenring aus rostfreiem Stahl, mehreren zwischen dem Innen- und Außenring positionierten Wälzkörpern und einem Polymerkäfig, der die Wälzkörper zwischen den Ringen beabstandet,
wobei der Polymerkäfig aus einem Material hergestellt ist, das aus einer Polyetheretherketon, Polyparaphenylen, Polyimid und Polyamidimid enthaltenden Gruppe ausgewählt ist,
**dadurch gekennzeichnet, dass** der Innen- und der Außenring aus einem durchgehärteten, martensitischen, rostfreien Super-Tough-Stahl mit hohem Stickstoffgehalt mit einer sehr feinen Materialstruktur bestehen, wobei der Stahl aus 0,25 - 0,45% C, 13 - 17% Cr, 0,8 - 1,8% Mo, 0,15 - 0,45% N und der Rest Fe und Unreinheiten besteht, wobei alle Prozentanteile Gewichtsprozent sind, die Rockwell-C-Härte HRC > 58 ist und der Restaustenitgehalt < 7 Vol-% ist, und
dass die Wälzkörper aus einem Siliziumnitridkeramikverbundwerkstoff oder einem Aliminiumoxid-Zirkoniumoxid-Keramik-Verbundwerkstoff hergestellt sind.

## Revendications

1. Palier à roulement pour une pompe cryogénique, le palier étant submergé dans un fluide à une température en dessous de -100 degrés centigrade, et incorporant un chemin de roulement intérieur et un chemin de roulement extérieur en acier inoxydable, une pluralité de corps de roulement positionnés entre les chemins de roulement intérieur et extérieur, et une cage en polymère espaçant les corps de roulement entre les chemins de roulement,
la cage en polymère étant fabriquée en un matériau choisi parmi un groupe incorporant le polyéther éther cétone : le polyparaphénylène ; le polyimide et le polyamide-imide,
**caractérisé en ce que**
les chemins de roulement intérieur et extérieur sont constitués d'un acier inoxydable revenu,
martensitique extra-dur à haute teneur en azote, ayant une structure de matériau très fine, l'acier se composant de 0,25 à 0,45 % de C, de 13 à 17 % de Cr, de 0,8 à 1,8 % de Mo, de 0,15 à 0,45 % de N, et le reste étant du Fe et des impuretés, tous les pourcentages étant en poids, la dureté Rockwell C HRC étant de > 58 et la teneur en austénite retenue étant de < 7 % en volume, et
**en ce que** les corps de roulement sont fabriqués à partir d'un composite céramique en nitrure de silicium ou en un composite céramique alumine-zircone.
